# EUROPÄISCHE PATENTSCHRIFT

(11) **EP 1 122 116 B1**
(45) Veröffentlichungstag und Bekanntmachung des Hinweises auf die Patenterteilung: **26.10.2011**
(21) Anmeldenummer: 01100195.5
(22) Anmeldetag: 18.01.2001
(51) Int. Cl.: F16H 61/688

(54) **Verfahren zur Steuerung eines Doppelkupplungsgetriebes**
Control method for a double input clutch transmission
Méthode de commande d'une boîte de vitesses à double embrayage

(30) Priorität: 02.02.2000 DE 10004530
(43) Veröffentlichungstag der Anmeldung: 08.08.2001
(73) Patentinhaber: Volkswagen Aktiengesellschaft, 38436 Wolfsburg (DE)
(72) Erfinder: Cappelmann, Bernd, 38167 Wendeburg (DE); Fähland, Jörg, Dipl.Ing., 38524 Sassenburg (DE); Damm ,Ansgar, Dr., 38518 Gifhorn (DE)

(56) Entgegenhaltungen:
- EP-A1- 0 367 020
- DE-A1- 3 513 279
- DE-A1- 3 721 214
- DE-A1- 3 812 327
- DE-A1- 19 859 458
- DE-C1- 19 631 983

## Beschreibung

Die Erfindung betrifft ein Verfahren zur Steuerung eines Doppelkupplungsgetriebes mit zwei Eingangswellen, wobei der ersten Eingangswelle eine erste Reibkupplung und der zweiten Eingangswelle eine zweite Reibkupplung zugeordnet ist und mit Hilfe jeder Reibkupplung ein erster und zweiter Antriebsstrang realisierbar ist, wobei von den Reibkupplungen ein Motormoment von der jeweiligen Getriebeeingangswelle über den jeweiligen Antriebsstrang auf die Getriebeausgangswelle übertragen wird, wobei das Getriebe mindestens zwei Gangstufen aufweist, die erste Gangstufe zumindest durch ein erstes Zahnradpaar gebildet und im ersten Antriebsstrang vorgesehen ist und die zweite Gangstufe zumindest durch ein zweites Zahnradpaar gebildet und im zweiten Antriebsstrang vorgesehen ist, wobei bei einem Gangstufenwechsel von der ersten zur zweiten Gangstufe ein Wechsel des Kraftflusses vom ersten Antriebsstrang auf den zweiten Antriebsstrang erfolgt und wobei der Kraftfluß des ersten Antriebsstranges durch das Ausrücken einer mit dem ersten Zahnradpaar zumindest teilweise in Eingriff stehenden Schiebemuffe zur Realisierung des Gangstufenwechsels unterbrochen wird.

Im Stand der Technik (DE-C-38 12 327), ist ein Verfahren zur Steuerung eines Doppelkupplungsgetriebes bekannt, bei dem die beiden Reibkupplungen über zwei Aktuatoren angesteuert, also geöffnet bzw. geschlossen werden. Das Doppelkupplungsgetriebe weist hier mehrere Gangstufen, nämlich insgesamt sechs einlegbare Gänge auf. Wenn bspw. vom ersten in den zweiten Gang hochgeschaltet werden soll, ist zunächst die zweite Reibkupplung geöffnet und> die erste Reibkupplung geschlossen. Durch die zeitliche Überschneidung der Öffnung bzw. Schließung der beiden Reibkupplungen wird in diesem Fall eine Hochschaltung ohne Zugkraftunterbrechung bewirkt. Wird bspw. der Kraftfluß vom ersten Antriebsstrang bei geschlossener erster Reibkupplung auf den zweiten Antriebsstrang übertragen, so wird die erste Reibkupplung langsam geöffnet, während die zweite Reibkupplung langsam geschlossen wird. Zur Verminderung des Steueraufwandes ist der Kraftfluß des ersten Antriebsstranges unterbrechbar, indem eine mit dem ersten Zahnradpaar zumindest teilweise in Eingriff stehende Schiebemuffe ausgerückt wird. Hierbei sind die hier vorgesehenen Schiebemuffen über Schaltgabeln betätigbar. Über ein vorgesehenes Steuergerät und über die zu betätigenden Schaltgabeln wird dann die Schiebemuffe ausgerückt, wenn an der Reibkupplung des jeweils nächsten Ganges Drehzahlgleichheit eintritt. Aufgrund der Unterbrechung des Kraftflusses des ersten Antriebsstranges durch das Ausrücken der Schiebemuffe kann auf die Anordnung weiterer Steuerelemente zur Steuerung eines ruckfreien Gangstufenwechsels hier verzichtet werden.

Weiterhin ist im Stand der Technik ein Verfahren zur Steuerung eines Doppelkupplungsgetriebes bekannt (DE-C-196 31 983), wobei hier zur Steuerung des Gangstufenwechsels innerhalb des Doppelkupplungsgetriebes die andere, d.h. die freie Getriebeeingangswelle auf eine synchrone Drehzahl gebracht wird, um so das Einlegen des geplanten Ganges zu ermöglichen. Um einen Zustand zu verhindern, in dem beide Reibkupplungen im Haftreibungsbereich liegen und so eine Blockierung des Getriebes die Folge wäre, ist hier vorgesehen, die Drehzahl zumindest einer Reibkupplung auf einen Wert in der Nähe des Synchrondrehzahl im Gleitreibungsbereich zu regeln, bis das zu übertragende Moment stetig von einer Reibkupplung auf die andere Reibkupplung "umgelagert" worden ist. Zur Realisierung dieses Verfahrens und zur Steuerung des Doppelkupplungsgetriebes sind mehrere Steuerelemente erforderlich.

Das Verfahren zur Steuerung des im Stand der Technik bekannten Doppelkupplungsgetriebes (DE-C-38 12 327) ist noch nicht optimal ausgebildet. Der Steuerungsaufwand zur Realisierung dieses Verfahrens ist sehr hoch. Einerseits sind zunächst zwei Aktuatoren vorgesehen, nämlich für jede Reibkupplung des Doppelkupplungsgetriebes jeweils der Aktuator. Diese Aktuatoren müssen nun so angesteuert werden, daß die erste Reibkupplung geschlossen wird, während die zweite Reibkupplung geöffnet wird, um hier die entsprechende "Überschneidung" der Reibkupplungen zu gewährleisten. Weiterhin sind die Betätigungsvorrichtungen, bspw. die Betätigungsvorrichtung zur Betätigung der Schaltgabeln, die die Schiebemuffen ansteuern pneumatisch, oder Druckmittel-betätigt steuerbar. Die Einleitung bzw. Druckbeaufschlagung mit Hilfe des Drucköles in die entsprechenden Kanäle ist hier sehr aufwendig. Im Ergebnis ist das bekannte Verfahren zur Steuerung des Doppelkupplungsgetriebes sehr kostenintensiv, da entsprechende Steuerelemente sowie komplizierte Steuerprogramme notwendig sind, um eine entsprechende Steuerung dieses Doppelkupplungsgetriebes zu realisieren.

Ein gattungsgemäßes Verfahren zur Steuerung eines Doppelkupplungsgetriebes mit nur einem Aktuator zur Ansteuerung beider Kupplunger ist aus der DE 19859458 bekannt.

Der Erfindung liegt daher die Aufgabe zugrunde, das eingangs genannte Verfahren zur Steuerung eines Doppelkupplungsgetriebes derart auszugestalten und weiterzubilden, daß die Kosten verringert sind.

Die zuvor aufgezeigte Aufgabe ist nun durch die Merkmale des Anspruchs 1 gelöst. Gemäß dem erfindungsgemäßen Verfahren ist zunächst nur noch ein Aktuator notwendig, um die beiden Reibkupplungen zu steuern, da nämlich zur Realisierung des Gangstufenwechsels auch nur eine Reibkupplung zunächst geschlossen wird, während die bereits geschlossene Reibkupplung auch geschlossen bleibt. Wenn das Drehmoment vom ersten Antriebsstrang auf den zweiten Antriebsstrang übertragen wird und Drehmomentenfreiheit des ersten Antriebsstranges vorliegt, rückt die entsprechende Schiebemuffe zur Unterbrechung des Kraftflusses des ersten Antriebsstranges selbsttätig aus. Hierdurch bedingt kann die erste Reibkupplung immer noch geschlossen bleiben, während die zweite Reibkupplung durch den Aktuator geschlossen worden ist, ohne daß es zu einer Blockierung innerhalb des Getriebes kommt. Folglich kann, nachdem die ursprünglich offene zweite Reibkupplung mit dem Aktuator geschlossen worden ist mit dem gleichen Aktuator dann auch die erste Reibkupplung die noch geschlossen ist, dann geöffnet werden. Durch die Realisierung des erfindungsgemäßen Verfahrens, insbesondere durch das selbsttätige Ausrücken der Schiebemuffe zur Unterbrechung des Kraftflusses, ist die Steuerung eines Doppelkupplungsgetriebes, nämlich der beiden Reibkupplungen mit nur einem Aktuator möglich, wobei auch der Steuerungsaufwand für die Schiebemuffe - was im folgenden noch deutlich werden wird - verringert ist. Dadurch sind wesentliche Kosteneinsparungen gewährleistet, da die Reibkupplungen eben nicht mehr gleichzeitig und voneinander unabhängig geregelt bzw. angesteuert werden müssen. Der gesamte Schaltablauf zur Steuerung der Reibkupplungen wird vereinfacht, wobei die Gefahr des Verklemmens des Getriebes während eines Gangstufenwechsels, also während einer Schaltung aufgrund eines bspw. nicht einwandfrei arbeitenden Kupplungsaktuators ebenfalls vermindert ist.

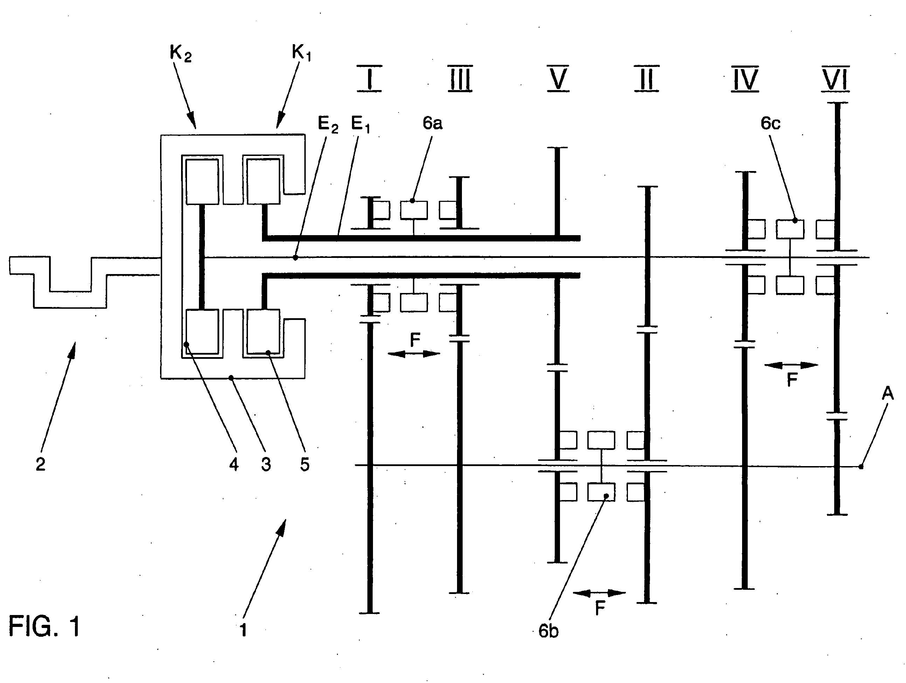

Es gibt nun eine Vielzahl von Möglichkeiten das erfindungsgemäße Verfahren zur Steuerung eines Doppelkupplungsgetriebes in vorteilhafter Weise auszugestalten und weiterzubilden. Hierzu darf zunächst auf die dem Patentanspruch 1 nachgeordneten Patentansprüche verwiesen werden. Im Einzelnen soll nun ein bevorzugtes Ausführungsbeispiel des erfindungsgemäßen Verfahrens anhand einer Zeichnung und der nachfolgenden dazugehörenden Beschreibung näher erläutert werden. In der Zeichnung zeigt
- Fig. 1: ein Doppelkupplungsgetriebe in einer stark vereinfachten schematischen Darstellung von oben zur Erläuterung des erfindungsgemäßen Verfahrens.

Die Fig. 1 soll das erfindungsgemäße Verfahren näher verdeutlichen. Fig. 1 zeigt ein hier schematisch dargestelltes Doppelkupplungsgetriebe 1 mit zwei Eingangswellen, nämlich einer ersten Eingangswelle E₁ und einer zweiten Eingangswelle E₂. Der ersten Eingangswelle E₁ ist eine erste Reibkupplung K₁ zugeordnet, wobei der zweiten Eingangswelle E₂ eine zweite Reibkupplung K₂ zugeordnet ist. Das hier dargestellte Doppelkupplungsgetriebe 1 wird durch eine Brennkraftmaschine angetrieben, deren Kurbelwelle 2 hier schematisch dargestellt ist. Die beiden Reibkupplungen K₁ und K₂ weisen einen gemeinsamen äußeren Kupplungskorb 3 auf und sind konzentrisch nebeneinander angeordnet. Über die hier vorgesehenen Reibplatten 4 bzw. 5 ist die erste Eingangswelle E₁ bzw. die zweite Eingangswelle E₂ mit dem Kupplungskorb 3 bzw. der Kurbelwelle 2 zur Übertragung eines entsprechenden Drehmomentes verbindbar. Die Eingangswelle E₁ ist hier als Hohlwelle ausgebildet und umgibt die Eingangswelle E₂.

Das hier dargestellte Doppelkupplungsgetriebe 1 weist insgesamt sechs Gangstufen, also sechs Gänge auf. Jede Gangstufe ist durch ein Zahnradpaar gebildet. Hierbei stehen die Zahnradpaarungen I bis VI für die einzelnen entsprechenden Gänge. Die Antriebsräder der Gangstufe V und II sind mit der jeweiligen Eingangswelle fest verbunden, während die Antriebsräder der Gänge I, III, IV und VI als nadelgelagerte Losräder ausgeführt sind, die über Schiebemuffen 6a und 6c betätigt werden können.

Die Getriebeabtriebswelle A trägt insgesamt sechs Abtriebsräder, wobei die Abtriebsräder der Gänge V und II als Losräder ausgeführt sind und über eine Schiebemuffe 6b geschaltet werden können. Die Abtriebsräder der Gänge I, III, IV und VI sind fest mit der Getriebeabtriebswelle A verbunden. Im ersten Gang (Gangstufe I) läuft der Kraftfluß über die geschlossene erste Kupplung K₁, die Eingangswelle E₁, die Schiebemuffe 6a, das Antriebsrad des ersten Ganges auf das Abtriebsrad des ersten Ganges und auf die Getriebeabtriebswelle A.

Bei eingerückter Reibkupplung K₁ und entsprechend nach rechts verschobener Schiebemuffe 6a ist der dritte Gang III geschaltet, bei eingerückter Reibkupplung K₁ und der Schiebemuffe 6b in der linken Stellung ist der fünfte Gang V geschaltet.

Analog sind bei eingerückter Reibkupplung K₂, jedoch geöffneter Kupplung K₁ die Gänge II, IV und VI schaltbar je nach Stellung der Schiebemuffen 6b und 6c.

Für die Schaltungen bei dem hier dargestellten Doppelkupplungsgetriebe 1, war es bisher im Stand der Technik üblich, daß zur Realisierung bei einem Gangstufenwechsel eine der Reibkupplungen K₁ bzw. K₂ in Haftreibung und die andere in Gleitreibung ist oder daß beide Reibkupplungen K₁ bzw. K₂ in Gleitreibung sind. Bspw. wurde für die sich in Haftreibung befindende und die Motorleistung übertragende jeweilige Reibkupplung eines kleinen Ganges eine Schlupfregelung vorgenommen werden. Hierfür wird die Kupplungsanpressung und/oder der Kupplungsweg soweit reduziert, daß die Reibkupplung mit ganz geringen Schlupf rutscht. Der Schlupf wurde dann durch Reglerfunktionen (Solldrehzahlvorgabe) aufrechterhalten, wobei das Steuergerät zuvor aus der Tatsache, daß die Motordrehzahl im Schlupfbetrieb höher ist, als die Getriebeeingangsdrehzahl, den Schluß ziehen konnte, daß sich der Motor im Zugbetrieb befindet. Die Reibkupplung des großen Ganges wurde dann rampenförmig (zunächst ungeregelt) geschlossen. Der große Gang übernahm dabei immer mehr Motormoment. Durch den Schlupfregler öffnete dabei die Kupplung des kleinen Ganges in gleichen Maße. Wenn der große Gang das volle Motormoment erreicht hatte, war die Kupplung des kleinen Ganges vollständig geöffnet, so daß der kleine Gang ohne Momentenreaktion, d.h. ohne Komforteinbußen, aus dem Triebstrang herausgenommen werden konnte. Allerdings müßte nun das Drehzahlniveau des Motors auf das Niveau des großen Gangs gesenkt werden, damit die jeweils andere Reibkupplung in Haftreibung übergehen konnte. Um Momentensprünge zu vermeiden, mußte ein entsprechender Drehzahlverlauf gewählt werden, wie dies aus dem Stand der Technik bekannt ist.

Erfindungsgemäß wird der bisher im Stand der Technik bekannte und soeben beschriebene Steuerungsaufwand nun dadurch vermindert, daß an der mit dem ersten Zahnradpaar I bis VI zumindest teilweise in Eingriff stehenden Schiebemuffe 6a,6b oder 6c eine Ausrückkraft F anliegt, daß während des Gangstufenwechsels von der ersten Gangstufe zur zweiten Gangstufe, bspw. von der Gangstufe I zur Gangstufe II, die erste Reibkupplung K₁ geschlossen bleibt und die zweite Reibkupplung K₂ mit Hilfe eines Aktuators geschlossen wird, daß das Drehmoment vom ersten Antriebsstrang auf den zweiten Antriebsstrang übertragen wird und daß bei Drehmomentenfreiheit des ersten Antriebsstranges der Antriebsstrang durch das selbsttätige Ausrücken der Schiebemuffe 6a, 6b oder 6c unterbrochen wird vzw. liegt die Ausrückkraft F hier permanent an. Das erfindungsgemäße Verfahren hat den Vorteil, daß nunmehr nur noch ein Aktuator zur Steuerung beider Reibkupplungen K₁ und K₂ notwendig ist und die Steuerung dieser Reibkupplungen K₁ und K₂ wesentlich vereinfacht ist, wodurch das gesamte Verfahren sehr kostengünstig realisiert werden kann und die eingangs beschriebenen Nachteile vermieden sind.

Das erfindungsgemäße Verfahren soll nun beispielhaft für den Gangstufenwechsel vom ersten zum zweiten Gang, also von der Gangstufe I zur Gangstufe II näher erläutert werden. Es darf an dieser Stelle angemerkt werden, daß unter dem Begriff erste bzw. zweite Gangstufe nicht speziell die erste Gangstufe I bzw. die zweite Gangstufe II also der erste Gang I bzw. der Gang II gemeint ist, sondern daß hier der Gangstufenwechsel zwischen zwei verschiedenen der sechs insgesamt vorhandenen Gänge gemeint ist, also der Gangstufenwechsel von einer ersten zu einer zweiten Gangstufe hier grundsätzlich zwischen der Gangstufenwechsel also den vorhandenen Gangstufen I bis VI erfolgen kann.

Mit einem Aktuator ist nun die erste und die zweite Reibkupplung K₁ und K₂ ansteuerbar. An den Schiebemuffen 6a bis 6c wird die anliegende Ausrückkraft F als Vorspannkraft über ein mechanisches Feder-System realisiert. Hierbei können die Schiebemuffen 6a bis 6c in die jeweiligen Losräder der Zahnradpaarungen I bis VI einrücken. Vorzugsweise sind hier die Verzahnungen der Schiebemuffen 6a bis 6c und der Losräder so ausgebildet, daß ein Hinterschnitt gebildet ist, d.h. daß also ein Ausrücken der Schiebemuffen 6a bis 6c vermieden ist, wenn die Ausrückkraft F anliegt und ein Drehmoment von der Schiebemuffen/Losradpaarung übertragen wird. Anders ausgedrückt, bei anliegender Ausrückkraft F können die entsprechenden Schiebemuffen 6a bis 6c nur dann ausrücken, wenn eben die entsprechende Schiebemuffe-Losradpaarung drehmomentenfrei ist.

Mit Hilfe der ersten Reibkupplung K₁ ist nun der erste, der dritte und der fünfte Gang I, III und V des Doppelkupplungsgetriebes 1 einlegbar, wobei mit Hilfe der zweiten Reibkupplung K₂ der zweite, der vierte und der sechste Gang II, IV und VI einlegbar sind. Zum Einlegen bzw. Herausnehmen der Gänge I bis VI sind hier die drei Schiebemuffen 6a, 6b und 6c vorgesehen, wobei auf die Schiebemuffen 6a bis 6c eine Ausrückkraft F zur Realisierung des selbsttätigen Ausrückens bei einem Gangstufenwechsel aufgebracht wird. Sämtliche Bewegungen, insbesondere das Einrücken der Schiebemuffen 6a bis 6c und das Schließen bzw. Öffnen der Reibkupplungen K₁ und K₂ werden mit Hilfe eines nicht dargestellten Steuergerätes sowie des erwähnten Aktuators bzw. entsprechende Steuerelemente gesteuert. Beispielhaft soll nun ein Gangstufenwechsel vom ersten Gang I zum zweiten Gang II beschrieben werden:

Bei eingelegten ersten Gang l, d.h. für diesen Fall ist hier dann der erste Gang, d.h. die erste Gangstufe l eingelegt, ist der erste Antriebsstrang gebildet aus der Kurbelwelle 2, dem Kupplungskorb 3, der ersten Reibkupplung K₁, der ersten Eingangswelle E₁, wobei das Drehmoment der Eingangswelle E₁ über das Zahnradpaar der ersten Gangstufe I, bei eingelegter Schiebemuffe 6a in der linken Stellung auf die Getriebeausgangswelle A übertragen wird. An der Schiebemuffe 6a liegt permanent eine Ausrückkraft F an, die die Schiebemuffe 6a aus der linken Position in die rechte Position bewegen will. Dies wird aber durch die zwischen der Schiebemuffe 6a und dem Losrad ausgebildeten Hinterschnitt solange vermieden wie auch hier ein Drehmoment bei dieser Schiebemuffen/Losradpaarung anliegt.

Soll nun der zweite Gang II, also die zweite Gangstufe II des Getriebes I eingelegt werden, so wird die Schiebemuffe 6b durch die entsprechende Betätigungsvorrichtung nach rechts bewegt, so daß diese mit dem Losrad des Zahnradpaares der zweiten Gangstufe II in Eingriff steht. Hierdurch wird dann über die Ausgangswelle A auch die Eingangswelle E₂ entsprechend angetrieben, wobei die Reibkupplung K₂ in diesem Augenblick noch geöffnet ist. Die Reibkupplung K₂ wird nun aber mit Hilfe des Aktuators geschlossen, wobei die Reibkupplung K₁ nach wie vor geschlossen bleibt. Dies hat zur Folge, daß die Reibkupplung K₂ innerhalb des Kupplungskorbes 3 rutscht, aber langsam das Drehmoment übernimmt, d.h. der Kraftfluß von der Eingangswelle E₁ auf die Eingangswelle E₂ übertragen wird. In diesem dynamischen Prozeß wird dann die Reibkupplung K₂ das Drehmoment der Kurbelwelle 2 vollständig übernehmen und in diesem Augenblick wird die Eingangswelle E₁ drehmomentenfrei, so daß nunmehr die Schiebemuffe 6a selbsttätig ausgerückt, nämlich unter Anliegen der Ausrückkraft F und der Kraftfluß des ersten Antriebsstranges unterbrochen wird, während der Kraftfluß nunmehr über den zweiten Antriebsstrang, nämlich über die Kurbelwelle 2 den Kupplungskorb 3, die zweite Reibkupplung K₂, die zweite Eingangswelle E₂ und über die zweite Gangstufe II auf die Getriebeausgangswelle A übertragen wird.

Durch das erfindungsgemäße Verfahren, nämlich durch die Steuerung des Ausrückens der entsprechenden Schiebemuffe zur Unterbrechung des Kraftflusses der jeweiligen Antriebsstränge, die auch bei den einem Gangstufenwechsels zwischen den übrigen Gängen, bspw. zwischen II und III, zwischen III und IV, zwischen IV und V und schließlich zwischen V und VI (und auch umgekehrt) erfolgen kann, ist der Steuerungsaufwand für das hier dargestellte Doppelkupplungsgetriebe 1 wesentlich verringert. Da nur noch mit einem Aktuator beide Reibkupplungen K₁ und K₂ angesteuert werden können und die Steuerung der Reibkupplungen K₁ und K₂ hier nicht mehr aufeinander aufwendig abgestimmt werden müssen. Im Ergebnis ist das erfindungsgemäße Verfahren kein großer Aufwand, so daß die damit verbundenen Kosten gering sind.

### BEZUGSZEICHENLISTE

- 1: Doppelkupplungsgetriebe
- 2: Kurbelwelle
- 3: Kupplungskorb
- 4: Reibplatte
- 5: Reibplatte
- 6a: Schiebemuffe
- 6b: Schiebemuffe
- 6c: Schiebemuffe

- E₁: erste Eingangswelle
- E₂: zweite Eingangswelle
- K₁: erste Reibkupplung
- K₂: zweite Reibkupplung

- I, II, III, IV, V, VI: Gänge bzw. Gangstufen bzw. Zahnradpaare

- A: Getriebeabtriebswelle
- F: Ausrückkraft

## Patentansprüche

1. Verfahren zur Steuerung eines Doppelkupplungsgetriebes (1) mit zwei Eingangswellen (E₁,E₂), wobei der ersten Eingangswelle (E₁) eine erste Reibkupplung (K₁) und der zweiten Eingangswelle (E₂) eine zweite Reibkupplung (K₂) zugeordnet ist und mit Hilfe jeder Reibkupplung (K₁,K₂) ein erster und zweiter Antriebsstrang realisierbar ist, wobei von den Reibkupplungen (K₁,K₂) ein Motormoment von der jeweiligen Eingangswelle (E₁,E₂) über den jeweiligen Antriebsstrang auf die Getriebeausgangswelle übertragen wird, wobei das Getriebe mindestens zwei Gangstufen aufweist, die erste Gangstufe (I) zumindest durch ein erstes Zahnradpaar (I) gebildet und im ersten Antriebsstrang vorgesehen ist und die zweite Gangstufe (II) zumindest durch ein zweites Zahnradpaar (II) gebildet und im zweiten Antriebsstrang vorgesehen ist, wobei bei einem Gangstufenwechsel von der ersten zur zweiten Gangstufe ein Wechsel des Kraftflusses vom ersten Antriebsstrang auf den zweiten Antriebsstrang erfolgt und wobei der Kraftfluss des ersten Antriebesstranges zur Realisierung des Gangstufenwechsels unterbrochen wird, wobei während des Gangstufenwechsels von der ersten Gangstufe (I) zur zweiten Gangstufe (II) die erste Reibkupplung (K₁) geschlossen bleibt und die zweite Reibkupplung (K₂) geschlossen wird, wobei mit nur einem Aktuator beide Reibkupplungen (K₁,K₂) angesteuert werden, und wobei das Drehmoment vom ersten Antriebsstrang auf den zweiten Antriebsstrang übertragen wird, **dadurch gekennzeichnet, dass** an einer mit dem ersten Zahnradpaar (I) zumindest teilweise in Eingriff stehenden Schiebemuffe (6a) eine Ausrückkraft (F) anliegt, dass bei Drehmomentenfreiheit des ersten Antriebsstranges der Kraftfluss des ersten Antriebsstranges durch das selbsttätige Ausrücken der Schiebemuffe (6a) unterbrochen wird, und dass mit Hilfe des Aktuators nach dem Schließen der einen Reibkupplung (K1 bzw. K2) die jeweils andere, noch geschlossene Reibkupplung (K2 bzw. K1) geöffnet wird.

2. Verfahren nach Anspruch 1, **dadurch gekennzeichnet, daß** die an der Schiebemuffe (6a,6b,6c) anliegende Ausrückkraft (F) als Vorspannkraft über ein mechanisches Feder-System realisiert wird.

3. Verfahren nach einem der vorstehenden Ansprüche, **dadurch gekennzeichnet, daß** mit Hilfe der ersten Reibkupplung (K₁) der erste, der dritte und der fünfte Gang (I,III,V) des Getriebes einlegbar sind.

4. Verfahren nach einem der vorstehenden Ansprüche, **dadurch gekennzeichnet, daß** mit Hilfe der zweiten Reibkupplung (K₂) der zweite, der vierte und der sechste Gang (II,IV,VI) des Getriebes einlegbar sind.

5. Verfahren nach einem der vorstehenden Ansprüche, **dadurch gekennzeichnet, daß** zum Einlegen bzw. Herausnehmen der Gänge (I,II,III,IV,V,VI) drei Schiebemuffen (6a,6b,6c) vorgesehen sind und auf die Schiebemuffen (6a,6b,6c) eine Ausrückkraft (F) zur Realisierung des selbsttätigen Ausrückens bei einem Gangstufenwechsel aufgebracht wird.

6. Verfahren nach einem der vorstehenden Ansprüche, **dadurch gekennzeichnet, daß** die Schiebemuffen (6a,6b,6c) mit Hilfe von Betätigungsvorrichtungen eingerückt werden.

7. Verfahren nach einem der vorstehenden Ansprüche, **dadurch gekennzeichnet, daß** der Aktuator und die Betätigungsvorrichtungen mit Hilfe eines Steuergerätes gesteuert werden.

## Claims

1. Method for controlling a double-clutch transmission (1) having two input shafts (E₁, E₂), the first input shaft (E₁) being assigned a first friction clutch (K₁) and the second input shaft (E₂) being assigned a second friction clutch (K₂), and it being possible for a first and second drive train to be realized with the aid of each friction clutch (K₁, K₂), an engine moment being transmitted by the friction clutches (K₁, K₂) from the respective input shaft (E₁, E₂) via the respective drive train to the transmission output shaft, the transmission having at least two gear stages, the first gear stage (I) being formed at least by a first gearwheel pair (I) and being provided in the first drive train, and the second gear stage (II) being formed at least by a second gearwheel pair (II) and being provided in the second drive train, a change of the force flow from the first drive train to the second drive train during a gear-stage change from the first to the second gear stage, and the force flow of the first drive train being interrupted in order to realize the gear-stage change, the first friction clutch (K₁) remaining closed and the second friction clutch (K₂) being closed during the gear-stage change from the first gear stage (I) to the second gear stage (II), both friction clutches (K₁, K₂) being actuated by way of only one actuator, and the torque being transmitted from the first drive train to the second drive train, **characterized in that** there is a disengagement force (F) on a slider sleeve (6a) which is in at least partial engagement with the first gearwheel pair (I), **in that**, in the case of an absence of torque in the first drive train, the force flow of the first drive train is interrupted by the automatic disengagement of the slider sleeve (6a), and **in that**, with the aid of the actuator, after one friction clutch (K₁ or K₂) is closed, the respectively other, still closed friction clutch (K₂ or K₁) is opened.

2. Method according to Claim 1, **characterized in that** the disengagement force (F) which bears on the slider sleeve (6a, 6b, 6c) is realized as a prestressing force via a mechanical spring system.

3. Method according to one of the preceding claims, **characterized in that** the first, the third and the fifth gears (I, III, V) of the transmission can be engaged with the aid of the first friction clutch (K₁).

4. Method according to one of the preceding claims, **characterized in that** the second, the fourth and the sixth gears (II, IV, VI) of the transmission can be engaged with the aid of the second friction clutch (K₂).

5. Method according to one of the preceding claims, **characterized in that** three slider sleeves (6a, 6b, 6c) are provided for engaging and disengaging the gears (I, II, III, IV, V, VI), and a disengagement force (F) is applied to the slider sleeves (6a, 6b, 6c) in order to realize the automatic disengagement in the case of a gear-stage change.

6. Method according to one of the preceding claims, **characterized in that** the slider sleeves (6a, 6b, 6c) are engaged with the aid of actuating devices.

7. Method according to one of the preceding claims, **characterized in that** the actuator and the actuating devices are controlled with the aid of a control unit.

## Revendications

1. Procédé de commande d'une boîte de vitesses à double embrayage (1) comportant deux arbres d'entrée (E₁, E₂), dans lequel un premier embrayage à friction (K₁) est associé au premier arbre d'entrée (E₁) et un deuxième embrayage à friction (K₂) est associé au deuxième arbre d'entrée (E₂) et une première et une deuxième ligne d'entraînement peut être réalisée à l'aide de chaque embrayage à friction (K₁, K₂), dans lequel un couple moteur est transmis par les embrayages à friction (K₁, K₂) de l'arbre d'entrée respectif (E₁, E₂) à l'arbre de sortie de la boîte de vitesses par l'intermédiaire de la ligne d'entraînement respective, dans lequel la boîte de vitesses présente au moins deux rapports, le premier rapport (I) est formé au moins par une première paire de roues dentées (I) et est prévu dans la première ligne d'entraînement et le deuxième rapport (II) est formé au moins par une deuxième paire de roues dentées (II) et est prévu dans la deuxième ligne d'entraînement, dans lequel, lors d'un changement de rapport de vitesse du premier rapport au deuxième rapport, il se produit un changement du flux de force de la première ligne d'entraînement à la deuxième ligne d'entraînement et dans lequel le flux de force de la première ligne d'entraînement est interrompu pour la réalisation du changement de rapport de vitesse, dans lequel, pendant le changement de rapport de vitesse du premier rapport (I) au deuxième rapport (II), le premier embrayage à friction (K₁) reste fermé et le deuxième embrayage à friction (K₂) s'ouvre, dans lequel les deux embrayages à friction (K₁, K₂) sont manoeuvrés avec un seul actionneur, et dans lequel le couple moteur est transféré de la première ligne d'entraînement à la deuxième ligne d'entraînement, **caractérisé en ce qu'**une force de débrayage (F) est appliquée à un manchon extérieur (6a) qui est au moins partiellement en prise avec la première paire de roues dentées (I), **en ce que**, lorsque la première ligne d'entraînement est libre de couple moteur, le flux de force de la première ligne d'entraînement est interrompu par le débrayage automatique du manchon extérieur (6a), et **en ce que**, après la fermeture d'un embrayage à friction (K₁ ou K₂), on ouvre l'autre embrayage à friction respectif encore fermé (K₂ ou K₁) à l'aide de l'actionneur.

2. Procédé selon la revendication 1, **caractérisé en ce que** l'on réalise la force de débrayage (F) appliquée au manchon extérieur (6a, 6b, 6c) comme force de précontrainte au moyen d'un système mécanique à ressort.

3. Procédé selon l'une quelconque des revendications précédentes, **caractérisé en ce que** l'on peut engager le premier, le troisième et le cinquième rapports (I, III, V) de la boîte de vitesses à l'aide du premier embrayage à friction (K₁).

4. Procédé selon l'une quelconque des revendications précédentes, **caractérisé en ce que** l'on peut engager le deuxième, le quatrième et le sixième rapports (II, IV, VI) de la boîte de vitesses à l'aide du deuxième embrayage à friction (K₂).

5. Procédé selon l'une quelconque des revendications précédentes, **caractérisé en ce qu'**il est prévu, pour l'engagement ou le dégagement des rapports (I, II, III, IV, V, VI), trois manchons extérieurs (6a, 6b, 6c) et on applique aux manchons extérieurs (6a, 6b, 6c) une force de débrayage (F) pour la réalisation du débrayage automatique lors d'un changement de rapport de vitesse.

6. Procédé selon l'une quelconque des revendications précédentes, **caractérisé en ce que** l'on embraye les manchons extérieurs (6a, 6b, 6c) à l'aide de dispositifs de manoeuvre.

7. Procédé selon l'une quelconque des revendications précédentes, **caractérisé en ce que** l'on commande l'actionneur et les dispositifs de manoeuvre à l'aide d'un appareil de commande.
